# EUROPÄISCHE PATENTSCHRIFT

(11) **EP 0 760 836 B1**
(45) Veröffentlichungstag und Bekanntmachung des Hinweises auf die Patenterteilung: **29.07.1998**
(21) Anmeldenummer: 95922461.9
(22) Anmeldetag: 18.05.1995
(51) Int. Cl.: C09B 67/00, C09K 19/00, C09K 19/52, C09D 5/36

(54) **EFFEKTLACK BZW. EFFEKTLACKIERUNG, INSBESONDERE FÜR FAHRZEUGKAROSSERIEN, UNTER VERWENDUNG VON FLÜSSIGKRISTALLINEN INTERFERENZPIGMENTEN**
EFFECT LACQUER AND LACQUERING, IN PARTICULAR FOR CAR BODIES, BY MEANS OF LIQUID CRYSTAL INTERFERENCE PIGMENTS
LAQUE FANTAISIE ET LAQUAGE FANTAISIE, NOTAMMENT DE CARROSSERIES DE VEHICULES, AU MOYEN DE PIGMENTS D'INTERFERENCE A CRISTAUX LIQUIDES

(30) Priorität: 24.05.1994 DE 4418075
(43) Veröffentlichungstag der Anmeldung: 12.03.1997
(73) Patentinhaber: DAIMLER-BENZ AKTIENGESELLSCHAFT, 70567 Stuttgart (DE); Wacker-Chemie GmbH, 81737 München (DE)
(72) Erfinder: GAILBERGER, Michael, D-89231 Neu-Ulm (DE); STROHRIEGL, Peter, D-95503 Hummeltal (DE); STOHR, Andreas, D-95448 Bayreuth (DE); MÜLLER-REES, Christoph, D-82049 Pullach (DE)
(86) Internationale Anmeldenummer: EP9501894
(87) Internationale Veröffentlichungsnummer: WO9532247

(56) Entgegenhaltungen:
- EP-A- 0 358 208
- EP-A- 0 601 483
- WO-A-91/13125
- WO-A-93/12195
- FR-A- 2 133 897
- GB-A- 2 132 623
- GB-A- 2 276 883

## Beschreibung

Die Erfindung betrifft Interferenzpigmente auf der Basis von flüssigkristallinen Polymeren nach Anspruch 1, einen Effektlack nach dem Oberbegriff des Anspruches 18 und damit lackierte Gebrauchsgegenstände, insbesondere Kraftfahrzeug-Karosserien, nach dem Oberbegriff des Anspruches 27. Außerdem beinhaltet die Erfindung ein Verfahren zur Herstellung der Interferenzpigmente nach Anspruch 10. Flüssigkristalline Polymere gehen beispielsweise aus der DE 40 08 076 A, der EP 66 137 A und der US-PS 5,188,760 als bekannt hervor.

Bei den üblichen Fahrzeug-Uni-Lacken sind in der Regel in einen klaren Träger aus Kunstharz Farbpigmente eingelagert, die die gewünschte Farbtönung des Lackes bestimmen. Die Farbwirkung dieser Pigmente beruht auf einer spektral selektiven Absorbtionswirkung, so daß von dem auftreffenden - weißen - Licht ein spektral breiter Anteil von den Pigmenten absorbiert und nur ein spektral schmaler Anteil reflektiert wird.

In dem Bemühen um brillantere Farbeindrücke insbesondere bei Fahrzeugkarosserien hat man die sog. Effektlacke entwickelt. Bei einer Gruppe daraus, den Metallic-Lacken sind u.a. kleine Metallflitter als Pigmente mit in den Träger eingemischt. Bei einer anderen Gruppe werden beschichtete Glimmerpartikel als Pigmente verwendet. Bei diesen Effektlacken ist eine bessere Farbbrillanz als bei den Uni-Lacken erreichbar; außerdem ist je nach Lichteinfallrichtung und/oder Betrachtungsrichtung ein leicht geänderter Farbeindruck vorhanden, was erwünscht ist. Die EP 383 376 A1 beschreibt einen solchen Effektlack, bei dem kleine Glimmerplättchen allseits gleichmäßig mit einem vernetzten, flüssigkristallinen Polymer (LCP) in chiral-nematischer Anordnung beschichtet sind. Die Farberscheinung derartiger Pigmente kommt durch eine Interferenzerscheinung zustande. Von dem einfallenden Licht werden nur diejenigen Lichtwellen reflektiert, deren Wellenlänge mit den äquidistanten Netzebenenabständen der flüssigkristallinen Polymere interferieren, wogegen die Lichtanteile anderer Wellenlängen durch den klaren Lack-Körper hindurchgehen und von dem - vorzugsweise - dunklen Untergrund adsorbiert werden. Derartige, plättchenförmige, parallel zur lackierten Oberfläche ausgerichtete Interferenzpigmente haben bei orthogonaler Betrachtung eine bestimmte erste Farbe - Basisfarbe - und unter einer geneigten Betrachtungsrichtung eine zweite, kürzerwellige Farbe. Diese vom Betrachtungswinkel abhängige Farberscheinung der lackierten Oberfläche macht die Lackierung sehr effektvoll und für bestimmte Anwendungsfälle, bei denen derartige Farbeffekte vom Kunden positiv aufgenommen werden, sehr wünschenswert. Nachteilig ist die aufwendige Herstellung der Interferenzpigmente, wodurch sich der Effektlack und dementsprechend die Effektlackierung auf dem Gebrauchsgegenstand recht kostspielig gestalten.

Der Anmelderin ist vertraulich die Herstellung von Interferenzpigmenten auf der Basis von Polysiloxanen bekannt geworden, wobei diese jeweils als Ganzes aus kleinen Bruchstücken einer dünnen vernetzten Folie aus flüssigkristallinen Polymeren bestehen. Diese Interferenzpigmente selber sind farblos und klar durchsichtig. Die mit ihnen erzielbare Farbwirkung beruht auf der regelmäßigen Struktur und der gleichmäßigen Anordnung der Moleküle in dem Flüssigkristall und auf einer darauf zurückzuführenden Interferenz eines bestimmten spektralen Lichtanteiles, für den das Pigment reflektiv wirkt. Die anderen Lichtanteile gehen durch das Pigment hindurch. Dadurch lassen sich verblüffende Farbeffekte unterschiedlicher Art erzielen, je nach Ausgestaltung der Lackierung bzw. der Interferenzpigmente und deren Mischung. Abgesehen von der neuartigen ästhetischen Farbwirkung der Lackierung bzw. des dazu verwendeten Lackes bietet diese Lackierung auch noch eine Reihe technischer Vorteile. Die Interferenzpigmente haben aufgrund ihres chemischen Aufbaues ein etwa gleichgroßes spezifisches Gewicht wie der Träger der Pigmente bzw. die Lackbasis. Dadurch kommt es nicht zu einer massebedingten Entmischung von Pigmenten und Lackbasis bei der Lagerung des Lackes oder beim Applizieren des Lackes durch Versprühen mittels einer hochrotierenden Glocke, wie dies bei konventionellen Lakken mit spezifisch schweren Absorptionspigmenten - meist auf Metallbasis - zu beobachten ist. Da sich im übrigen das gesamte Farbspektrum durch Mischen einiger weniger Typen von Interferenzpigmente in unterschiedlichen Verhältnissen beim Lackierer herstellen lassen, kann die Lagerhaltung vor Ort auf einige wenige Grundtypen von Lacken beschränkt werden, so daß die Logistik bezüglich der verschieden Lackfarben ganz erheblich vereinfacht ist. Die Interferenzpigmente der angesprochenen Art werden gewonnen, indem die flüssigkristallinen Polymere aus dem flüssigen Zustand heraus auf eine glatte Unterlage, beispielsweise auf eine polierte Walze aufgerakelt werden, wodurch sich ein dünner Film bildet. Durch den Rakelvorgang kommt es zu einer Ausrichtung der Moleküle innerhalb des Filmes, wobei die Ausrichtung um so besser ist, je dünner der Film ist; erst nach diesem Ausrichten weist der Film eine Interferenzfarbe auf. Aufgrund der Monomer-Architektur der Moleküle der flüssigkristallinen Polymere stellen sich beim Schervorgang während des Rakelns selbsttätig äquidistante Netzebenen und damit farbselektiv wirkende Beugungsstrukturen ein.

Die wirksame Interferenzfarbe der an sich durchsichtigen und farblosen Pigmente kann dadurch gebildet werden, daß in den smektischen oder cholesterischen Phasen der Interferenzpigmente die äquidistant beabstandeten Netzebenen hinsichtlich ihrer Netzebeneabstände der Wellenlänge einer bestimmten Farbtönung der farbbestimmenden Lacklage angepaßt werden, was durch geeignete chemische Strukturbildungsmaßnahmen bezüglich der Molekülarchitektur erreicht werden kann. Die Anmelderin konnte Interferenzpigmente mit der Grundfarbe Rot und andere mit der Grundfarbe Grün darstellen. In vorteilhafter Weise lassen sich Zwischenfarben dadurch herstellen, daß unterschiedliche Interferenzpigmente gemeinsam in einen Basislack eingemischt werden, wobei die Farbstellung von dem Mischungsverhältnis der unterschiedlichen Interferenzpigmente abhängt. Nachdem hier die Mischungsverhältnisse stufenlos variiert werden können, sind auch stufenlos alle Farbschattierungen für den Farbgrundton vorgebbar.

Der Farbgrundton der Interferenzpigmente ist bestimmt durch den Farbeindruck bzw. die Farbe, die sich bei senkrechter Beleuchtung der lackierten Oberfläche und senkrechter Betrachtung einstellt. Nachdem bei schräg zur Oberfläche gerichtetem Strahlengang die Netzebenenabstände - geometrisch bedingt - gegenüber der orthogonalen Strahlrichtung verändert erscheinen, verschiebt sich der Farbeindruck in Richtung zu einer im Farbspektrum in Richtung zu kürzeren Wellenlängen versetzt liegenden, anderen Farbe, und zwar hängt dies von der relativen Betrachtungsrichtung der Oberfläche ab. D.h. je nach Lage einer bestimmten Oberflächenpartie zum Strahlengang des Betrachters erscheint die Oberflächenpartie in der Grundfarbe oder in der anderen kürzerwelligen Farbe. Beispielsweise können Interferenzpigmente der Grundfarbe Rot in die Farbe Grün umschlagen; mit anderen Interferenzpigmenten ist ein Farbumschlag zwischen grün und blau darstellbar.

Die Intensität der dabei wahrnehmbaren Farben ist um so stärker, je dunkler die Farbe des Untergrundes ist, der die farbbestimmende Lacklage trägt, wobei der Farbton des Untergrundes allerdings durch absorptiv wirkende Farbpigmente bestimmt sein muß. Und zwar beruht dies darauf, daß die durch die Interferenzpigmente hindurchgehenden Lichtanteile vom dunklen Untergrund mehr oder weniger vollständig absorbiert werden, und zwar um so mehr, je dunkler der Untergrund ist. Je heller der Untergrund ist, ein um so größerer Lichtanteil aus dem nicht interferierenden Licht wird vom Untergrund ebenfalls zurückreflektiert und überlagert sich mit dem von den Interferenzpigmenten zurückgeworfenen Lichtanteil, so daß dieser in seiner Farbintensität blasser erscheint. Je heller also der Untergrund ist, um so geringer sind die Farbintensitäten der Grundfarbe und der umgeschlagenen Farbe. Dies geht soweit, daß auf beispielsweise verchromten Blankteilen überhaupt kein Farbeffekt erreichbar ist, weil es auf einem spiegelnden Untergrund nicht zu einer spektralen Intensitätsverschiebung im Licht kommt.

Eine Bedingung für das Auftreten von flüssigkristallinen Phasen ist eine starre mesogene Molekülgestalt. Die Repetitionseinheiten flüssigkristalliner Polymere enthalten die mesogenen Einheiten. Die beiden am häufigsten realisierten Molekülstrukturen sind die Seitenketten-LC-Polymere, bei denen die mesogenen Einheiten als Seitenketten des Polymerrückgrates chemisch fixiert sind, und die Hauptketten-LC-Polymere, bei denen die mesogenen Einheiten das Polymerrückgrat oder Teil des Polymerrückgrates bilden. Neben den Homopolymeren sind eine Vielzahl von Copolymeren darstellbar, die verschiedene mesogene Einheiten oder nicht-mesogene und mesogene Einheiten enthalten können.

Die EP 358 208 A2 beschreibt flüssigkristalline Organosiloxane und deren Herstellung, die (Meth)acryloxygruppen enthalten und die u.a. auch als Pigmente in Lacken eingesetzt werden können. Gemäß referierter Beispiel werden die flüssigkristallinen Polymere aus einer niedermolekularen nematischen Komponente mit Methacrylgruppen und aus einer niedermolekularen chiralen Verbindung gebildet, die vernetzt werden. Aus dieser Schrift lassen sich jedoch keine Hinweise dahingehend entnehmen, wie Interferenzpigmente durch Wahl einer optimierten stofflichen Zusammensetzung mit besserer farblicher Brillanz erzeugen lassen.

Die WO 91/13125 beschreibt Pigmente für Farben, bei denen plättchenförmige Substrate mit einem oder mehreren Metalloxiden überzogen sind, wobei der Überzug ein chirales, irisierendes flüssigkristallines Medium enthält Die flüssigkristallinen Zusammensetzungen bestehen gemäß dort genannter Beispiele aus niedermolekularen chiralen und nematischen Verbindungen auf P-Pentylbasis und/oder Cholestrylbasis. Diese Verbindungsklassen sind für den vorliegenden Anwendungsfall von wetterbeständigen und mechanisch widerstandsfähigen Lackierungen ungeeignet.

Die GB 2 132 623 A offenbart flüssigkristalline Polymere, welche aus niedermolekularen chiralen Cholesterinderivaten erhalten werden. Die Polymerfilme weisen irisierende Eigenschaften auf. Der Zusatz von niedermolekularen nematischen Verbindungen, welche auch photopolymerisierbare Gruppen enthalten (z.B. 4-Methoxyphenyl-4-[6-methacryloyloxyhexyloxy]benzoat), wird vorgeschlagen. Auch dieser Schrift lassen sich jedoch keine Hinweise auf Interferenzpigmente der hier relevanten bzw. interessierenden Zusammensetzung entnehmen.

Der Erfindung liegt die Aufgabe zugrunde, bezüglich der verschiedenen gattungsgemäß zugrundegelegten Kategorien, nämlich Interferenzpigmente, Verfahren zu deren Herstellung, Lack bzw. auf einem Gebrauchsgegenstand applizierte Lackierung, eine von der Basis der Polysiloxane unabhängige stoffliche Basis zu finden, die bei Effektlacken bzw. Effektlackierungen eine noch bessere Brillanz im Farbeindruck erwarten läßt, wobei die verwendeten Interferenzpigmente eine noch bessere chemische und physikalische Verträglichkeit mit den üblichen Lackkörpern besitzen sollen und auch in technisch einfacher Weise und kostengünstig herstellbar sein sollen.

Die gestellte Aufgabe wird erfindungsgemäß bezüglich des zugrundegelegten Interferenzpigmente durch die kennzeichnenden Merkmale des Anspruches 1, bezüglich des Verfahrens zu deren Herstellung durch die kennzeichnenden Merkmale des Anspruches 5, bezüglich des Lackes durch die kennzeichnenden Merkmale des Anspruches 9 und bezüglich der applizierten Lackierung durch die kennzeichnenden Merkmale des Anspruches 14 gelöst.

Es ist bekannt, daß flüssigkristalline Polymerer aufgrund ihres hohen Molekulargewichtes und der damit gegebenen hohen Viskosität eine lange Orientierungszeit besitzen. Dieser Nachteil wird anspruchsgemäß durch den Einsatz von niedermolekularen mono- oder difunktionellen Acrylaten, Methacrylaten, Epoxiden oder Vinylethern vermieden, die eine erheblich kürzere Orientierungszeit aufweisen und vernetzt werden können, um die ausgebildete Mesophase einzufrieren. Die derart erhaltenen polymeren Netzwerke zeigen keine flüssigkristallinen Übergänge mehr und sie bleiben bis zur thermischen Zersetzung in einem hochgeordneten Zustand, der konserviert ist. Die farbigen Filme bzw. die Interferenzpigmente erhält man durch Zumischung einer niedermolekularen chiralen Verbindung zu der nematischen Komponente, wodurch die Bildung der chiral nematischen reflektierenden Phase induziert wird.

In der Praxis hat es sich dabei herausgestellt, bei der Herstellung der farbgebenden Filme bzw. der Pigmente bevorzugt chirale Verbindungen einzusetzen, die gute flüssigkristallline und gute Vernetzereigenschaften besitzen. Wird ein cholesterisches Netzwerk mit nichtmesogenen Diacrylaten hergestellt, wird ein Vernetzer, z.B. ein 1,4-Diacryloyloxy-benzol zugesetzt.

Die eingesetzten nematischen und chiralen Komponenten sind teilweise als Handelsprodukte erhältlich bzw. ist ihre Herstellung aus der Literatur bekannt. Die Herstellung der nematischen Komponente Di-[4-(6-Acryloyloxyhexyloxy)benzoesäure]-1,4-phenyldiester ist beschrieben von D. J. Broer; J. Boven; G.N. Mol; G. Challa; Makromol. Chem. 190, 2255(1989) und die Herstellung der nematischen Komponente 4-(8-Acryloyloxy-3,6-dioxy-octoyloxy)benzoesäure-4'-methoxybiphenylester erfolgte nach M. Engel; B. Hisgen; R. Keller; W. Kreuder; B. Reck; H. Ringsdorf; H.-W. Schmidt; P. Tschirner; Pure and Appl. Chem. 57, 1009 (1985). Der als chirale Komponente eingesetzte 4-(4-Hexyloxybenzoyloxy)benzoesäure-2-octylester wird als Handelsprodukt von der Firma Merck unter der Bezeichnung S 811 vertrieben. Die chirale Komponente Cholesterylbutyrat wird von der Firma Fluka vertrieben unter der Bestellnummer 26 770. Die Herstellung der eingesetzten chiralen Komponente Cholesterylacrylat ist beschrieben von A. C. De Visser; K. De Groot; J. Feyen; A. Brantjes; J. Polym. Sci., A-1, 9, 1893 (1971). Die Herstellung der chiralen Komponente Cholesteryl-4-(6-acryloyloxyhexyloxy)benzoat erfolgte durch Veresterung mit Cholesterin über das entsprechende Säurechlorid. Das als Vernetzer eingesetzte 1,4-Diacryloyloxy-benzol wurde nach L. Liébert; L. Strzelecki; D. Vagogne; Bull. Soc. Chim. Fr. 9-10, 2073 (1975) hergestellt.

Der im Zusammenhang mit der Herstellung der Interferenzpigmente erzeugte Film sollte zumindest nach dem Aushärten eine Dicke von 3 bis 15 µm haben. Bei dünneren Filmen verliert sich die gewünschte interferenzwirksame Farberscheinung und bei dickeren Filmen ist die Ausrichtung der Moleküle nicht so gut, so daß die Farberscheinung durch ein milchiges Aussehen beeinträchtigt ist. Durch Zerkleinern des ausgehärteten Filmes in kleine Partikel entstehen die vorliegend erforderlichen Interferenzpigmente in Plättchenform, in denen ebenfalls bzw. nach wie vor die Seitengruppen-Mesogene zumindest näherungsweise nematisch und/oder smektisch und/oder vorzugsweise cholesterisch geordnet sind. Die verwendbaren plättchenförmigen Interferenzpigmente haben einen Plättchendurchmesser in der Größenordnung von 5 bis 100 µm oder etwa das Ein- bis Zehnfache der Filmdicke; kleinere oder größere Partikel, die beim Zerkleinern des ausgehärteten Filmes entstehen, müssen beispielsweise durch Siebvorgänge aussortiert werden. Beim Applizieren des damit pigmentierten Basislackes auf einer Oberfläche ordnen sich die plättchenförmigen Pigmente selbsttätig durch Scherkräfte in dem Basislack parallel zur Oberfläche an. Die kleinen, der Würfelform eher angenäherten Partikel richten sich im applizierten Lack jedoch nicht parallel zur Bauteiloberfläche aus, weshalb sie aussortiert werden sollten. Die sehr großen Pigmentplättchen können beim Applizieren des Lackes Probleme bieten, weshalb auch so große Pigmente ausgesiebt werden sollten.

Eine andere zweckmäßige Ausgestaltung der Lackierung kann darin gesehen werden, daß der Untergrund der farbbestimmenden Lacklage in einem solchen durch Absorptionspigmente hervorgerufenen Farbton gehalten ist, der mit der Grundfarbe oder mit der umgeschlagenen Farbe der Interferenzpigmente etwa übereinstimmt. Dadurch wird erreicht, daß die mit dem Untergrund übereinstimmende Farbe besonders intensiv und brillant erscheint. In der andere Betrachtungs- bzw. Beleuchtungsrichtung erscheint die Farbe der lackierten Oberfläche zwar auch in dem betreffenden Farbton des Untergrundes, ist jedoch in der anderen Farbe der Interferenzpigmente abgetönt und mit fein verteilten Flitterpunkten übersäht. Daneben ist es selbstverständlich auch noch möglich, den die farbbestimmende Lacklage tragenden Untergrund mittels Absorptionspigmenten weder dunkel, noch in einer der Farben der Interferenzpigmente, sondern in einer dritten Farbe abzutönen, die beispielsweise im Farbspektrum zwischen beiden Farben liegt oder einen besonders großen spektralen Abstand zu wenigstens einer der beiden Farben hat. Dadurch kann ein dreifacher Farbeindruck des lackierten Gegenstandes erreicht werden.

Alternativ zur zweckentsprechenden Abtönung des die farbbestimmende Lacklage tragenden Untergrundes oder auch zusätzlich dazu ist es ohne weiteres auch denkbar, dem - u.U. sogar unterschiedliche - Interferenzpigmente enthaltenden Effektlack auch noch Absorptionspigmente beizumischen. Durch das Zumischen von dunklen Absorptionspigmenten zu dem erfindungsgemäßen Effektlack kann ein durchaus vergleichbarer Eindruck wie durch einen dunklen Untergrund erreicht werden. Ähnlich verhält es sich beim Zumischen von hellen Absorptionspigmenten; sie bewirken eine Abschwächung des Farbumschlages und der einzelnen Farbintensitäten. Durch Zumischen von Absorptionspigmenten in einer der Effektfarben kann eine Intensivierung dieses Farbeindruckes zu Lasten der Farbwirkung der anderen Effektfarbe erreicht werden. Das Zumischen von Absorptionspigmenten zu dem Effektlack empfiehlt sich dann, wenn ein - aus welchen Gründen auch immer - heller oder gar ein metallisch glänzender Untergrund mit Effektlack lackiert werden soll. Eine solche Aufgabe kann sich beispielsweise beim Umlackieren von Altfahrzeugen oder bei Reparaturlackierungen stellen.

Nachfolgend wird die Erfindung anhand von Beispielen noch näher erläutert.

### Herstellung des farbgebenden Filmes:

Die Polymerfilme wurden in einer in-situ Photopolymerisation in der cholesterischen Phase der entsprechenden Monomermischung hergestellt. Eine Monomermischung, bestehend aus 50 Mol.-% einer nematischen Komponente und 50 Mol.-% einer chiralen Komponente und etwa 1 Gew.-% 2,2-Dimethoxy-2-phenylacetophenon wurden in 1 ml Chloroform gelöst. Als nematische Komponente wurde ein Di-[4-(6-Acryloyloxyhexyloxy)benzoesäure]-1,4-phenyldiester eingesetzt und als chirale Komponente ein Cholesterylacrylat. Die Reaktionslösung wurde auf eine Unterlage, z.B. auf eine Folie, auf ein Blech oder auf einen Objektträger, mit einer Schichtstärke von etwa 5 µm aufgetragen. Nach Verdampfung des Lösungsmittels wurde die beschichtete Unterlage auf 115°C erwärmt, wobei bei der Monomermischung die Mesophase ausgebildet wurde. Eine gute Orientierung wurde dadurch erzielt, indem man die Reaktionslösung auf die Unterlage aufrakelte, mit elektrischen oder magnetischen Feldern behandelte oder zuvor eine Orientierungsschicht auf die Unterlage aufbrachte. Anschließend wurde der aufgebrachte Film durch UV-Licht ausgehärtet. Der ausgehärtete Film besaß bei senkrechter Beleuchtung und senkrechter Aufsicht eine violette Farbe.

Durch Variation des Gehaltes an den beiden Komponenten kann man bei dem Film Reflektionsfarben im gesamten sichtbaren Bereich des Spektrums und im IR-Bereich einstellen, wie aus der nachfolgenden Tabelle ersichtlich ist.

| **Anteil des chiralen Monomers (Mol%)** | **Reflektionswellenlänge λ**_{**R**} **(nm)** |
|---|---|
| 10 | 1668 |
| 20 | 998.0 |
| 30 | 674.5 |
| 35 | 572.0 |
| 40 | 512.5 |
| 45 | 474.0 |
| 50 | 435.5 |
| 60 | 378.0 |
| 70 | 362.5 |

### Herstellung der Interferenzpigmente:

Der farbgebende Film wurde von der Unterlage mit einem klingenartigen Werkzeug abgeschält, wobei schuppenartige Gebilde erhalten wurden. Die Schuppen wurden anschließend mit einer Luftstrahlmühle (Firma Alpine) zerkleinert; es sind auch andere thermische schonende Mühlen für Kunststoffteile einsetzbar. Das erhaltene Mahlgut wurde darauf gesiebt und eine Siebfraktion mit einer mittleren Größe von etwa 30 µm für die Weiterverarbeitung verwendet.

### Herstellung des Lackes:

Die erhaltenen Interferenzpigmente wurden mit einem Klarlack im Verhältnis von 1 : 7 bis 1 : 20 Gewichtsteilen gemischt. Als Klarlack wurde ein Zweikomponenten-Decklack auf Polyurethanbasis; z.B. 2K-PU-Decklack 0111 der Firma BASF Lacke u. Farben oder ein Lack "Standox" der Firma Herberts verwendet.

### Effektlackierung eines Karosserieteiles:

Der Effektlack wurde durch ein pneumatisches Sprühverfahren (Werkzeug: SATA) auf einen KW-Schiebedachdeckel appliziert, der mit einer schwarzen Füllerlackierung der Bezeichnung DL 0404 der Anmelderin als Untergrund versehen war. Ein elektrostatisches Applikationsverfahren für den erfindungsgemäßen Effektlack mittels hochrotierenden Sprühglocken erscheint ebenfalls einsetzbar. Nach dem Auftrag wurde der Effektlack zunächst getrocknet und anschließend thermisch forciert gehärtet.

Auf dem Karosserieteil wurde als Ergebnis eine Farbbeschichtung erhalten, die unter diffusem Weißlicht - bei bewölktem Himmel - je nach der Betrachtungsrichtung in einer intensiv violetten Farbtönung bzw. in einem grünen Farbton erschien.

Ein anderer fargebender Film wurde aus Di-[4-(6-acryloyloxy) hexyloxy]benzoesäure-1,4-(2-methyl)phenyldiester als nematischer Komponente und Cholesteryl-2,3-(2-acryloyloxyethoxy)benzoat als chiraler Komponente hergestellt. Die Herstellung des Films erfolgte nach der im vorhergehenden Beispiel angegebenen Verfahrensweise mit dem Unterschied, daß die beschichtete Unterlage auf 90°C erwärmt wurde.
Bei diesem Film wurden folgende Reflektionswellenlängen eingestellt:

| **Anteil des chiralen Monomers (Mol%)** | **Reflektionswellenlänge λ**_{**R**} **(nm)** |
|---|---|
| 10 | 1668 |
| 20 | 998 |
| 30 | 674 |
| 35 | 572 |
| 40 | 512 |
| 45 | 474 |
| 50 | 435 |
| 60 | 378 |
| 70 | 362 |

Die Vorteile die mit Erfindungsgegenstand erzielt werden bestehen insbesondere darin, daß mit dem Effektlack bzw. mit der Effektlackierung eine noch höhere Farbbrillanz bei großer Lichtbeständigkeit erreicht wird als mit bisher bekannten Interferenzpigmenten erzielt werden konnte. Dies ist damit zu erklären, daß die erfindungsgemäßen Interferenzpigmente sehr schmalbandige Absorptionskurven für die verschiedenen Farben ausbilden. Außerdem besitzen die Interferenzpigmente eine bessere chemische und physikalische Verträglichkeit mit den üblichen Lacken, mit denen sie gemischt werden. Die erfindungsgemäßen Interferenzpigmente besitzen gegenüber den bisher bekannten eine wesentlich höhere Vernetzung, die insbesondere bei der Verwendung der difunktionellen nematischen Diacrylate und der difunktionellen chiral nematischen Diacrylate erreicht wird. Die hergestellten Interferenzpigmente besitzen eine große mechanische Stabilität und eine große Farbstabilität und zeigen eine hervorragende Haftfähigkeit und Benetzungsfähigkeit. Die Ausgangskomponenten für die flüssigkristallinen Seitenketten-Polymeren sind außerdem einfach und kostengünstig herzustellen.

## Patentansprüche

1. Interferenzpigmente aus flüssigkristallinen Seitenketten-Polymeren (LCP) für farbige Lacke, in denen die Seitengruppen-Mesogene zumindest näherungsweise nematisch und/oder smektisch und/oder cholesterisch geordnet sind,
**gekennzeichnet durch** die Gemeinsamkeit folgender Merkmale:
▷ die flüssigkristallinen Seitenketten-Polymere (LCP) der Interferenzpigmente sind aus einer nematischen und einer mit ihr vernetzten chiralen Komponente gebildet,
▷ wobei die nematische Komponente aus einer der nachfolgend aufgezählten, mono- oder difunktionellen, niedermolekularen Verbindungen oder einer Mischung daraus besteht, nämlich:
- Di-[4-(acryloyloxy)-alkyloxy]benzoesäure-1,4-phenyldiester,
- Di-[4-(acryloyloxy)-alkyloxy]benzoesäure-1,4-(2-methyl)phenyldiester,
- Di-[4-(acryloyloxy)alkyloxy]benzoesäure-1,4-(2-methoxy)phenyldiester,
▷ wobei die chirale Komponente aus einer der nachfolgend aufgezählten, optisch isomeren, ein Chiralitätszentrum aufweisenden niedermolekularen Verbindung oder einer Mischung daraus besteht, nämlich:
- Cholesteryl-3,5-(acryloyloxyalkoxy)benzoat,
- Cholesteryl-3,4-(acryloyloxyalkoxy)benzoat,
- Cholesteryl-2,5-(acryloyloxyalkoxy)bezoat,
- Cholesteryl-2,4-(acryloyloxyalkoxy)benzoat,
- β-Oestradiyl-3,17-(acryloylalkyloxy)benzoat,
- β-Oestradiyl-3,17-acrylat,
- R- bzw. S-1,1'-Bi-2-naphtoyl[-4-alkoxybenzoyloxy]-(4,4-biphenyloyl-oxyalkoxyacrylat),
- R- bzw. S-1,1'-Bi-2-naphtoyl[hexylterephthaloyl)-(4,4-biphenyloyloxyalkoxyacrylat),
- R bzw. S-Di-[4-(3-acryloyloxy-2-methylpropoxy)benzoesäure]-1,4-phenyldiester,
- 4-(4-Hexyloxybenzyoloxy)benzoesäure-2-octylester,
- Di-[4-(3-acryloyloxy-2-methylpropoxy)benzoesäure-1,4-phenyldiester,
- Di-[4-(3-acryloyloxy-2-methylpropoxy]benzoesäure-1,4-(2-methyl)-phenyldiester,
- Di-[4-(3-acryloyloxy)-2-methylpropoxy]benzoesäure-1,4-(2-methoxy)-phenyldiester,
- Di-[4-(1-acryloyloxy-1-methylethoxy]benzoesäure-1,4-phenyldiester,
- Di-[4-(1-acryloyloxy-1-methylethoxy]-benzoesäure-1,4-(2-methyl)-phenyldiester,
- Di-[4-(1-acryloyloxy)-1-methylethoxy]benzoesäure-1,4-(2-methoxy)-phenyldiester,
- Di-[4-(6-acryloyloxy-3-methylhexoxy]benzoesäure-1,4-phenyldiester,
- Di- [4-(6-acryloyloxy-3-methylhexoxy]benzoesäure-1,4-(2-methyl)-phenyldiester,
- Di-[4-(6-acryloyloxy)-3-methylhexoxy]benzoesäure-1,4-(2-methoxy)-phenyldiester.

2. Interferenzpigmente nach Anspruch 1,
**dadurch gekennzeichnet,**
daß ein den Ausgangskomponenten zugesetzter Vernetzer aus 1,4-Diacryloyloxy-benzol besteht.

3. Interferenzpigmente nach Anspruch 1,
**dadurch gekennzeichnet,**
daß die Interferenzpigmente eine Stärke von etwa 3 bis 15 µm aufweisen.

4. Interferenzpigmente nach Anspruch 1,
**dadurch gekennzeichnet,**
daß die plättchenförmigen Interferenzpigmente einen Durchmesser von 5 bis 100 µm, vorzugsweise von 10 bis 50 µm aufweisen.

5. Verfahren zum Herstellen von plättchenförmigen Interferenzpigmenten, insbesondere zum Herstellen von Interferenzpigmenten nach Anspruch 1, bei dem durch Aufbringen von flüssigkristallinen Seitenketten-Polymeren (LCP) in flüssigem Zustand auf einer glatten Unterlage ein dünner Film mit zumindest näherungsweise nematisch und/oder smektisch und/oder cholesterisch geordneten Molekülen erzeugt wird, bei dem dieser Film ausgehärtet, von der Unterlage abgezogen und in plättchenförmige Partikel zerkleinert wird, wobei vor Weiterverarbeitung der Partikel als Interferenzpigmente die im Durchmesser kleiner als die Filmstärke messenden Partikel und die im Durchmesser um mehr als das Zehnfache größer als die Filmstärke messenden durch ein korngrößen-selektives Trennverfahren aussortiert werden,
**dadurch gekennzeichnet,**
daß der Dünnfilm aus flüssigkristallinen Seitenketten-Polymeren (LCP) gemäß folgender Kennzeichnung als Lösungsmittelauftrag aufgebracht oder aus einem Pulver aufgeschmolzen wird:
▷ die Seitenketten-Polymere sind aus einer nematischen und einer mit ihr vernetzten chiralen Komponente gebildet,
▷ wobei die nematische Komponente aus einer der nachfolgend aufgezählten, mono- oder difunktionellen, niedermolekularen Verbindungen oder einer Mischung daraus besteht, nämlich:
- Di-[4- (acryloyloxy)-alkyloxy]benzoesäure-1,4-phenyldiester,
- Di-[4- (acryloyloxy)-alkyloxy]benzoesäure-1,4-(2-methyl)phenyldiester,
- Di-[4-(acryloyloxy)alkyloxy]benzoesäure-1,4-(2-methoxy)phenyldiester,
▷ wobei die chirale Komponente aus einer der nachfolgend aufgezählten, optisch isomeren, ein Chiralitätszentrum aufweisenden niedermolekularen Verbindung oder einer Mischung daraus besteht, nämlich:
- Cholesteryl-3,5-(acryloyloxyalkoxy)benzoat,
- Cholesteryl-3,4-(acryloyloxyalkoxy)benzoat,
- Cholesteryl-2,5-(acryloyloxyalkoxy)bezoat,
- Cholesteryl-2,4-(acryloyloxyalkoxy)benzoat,
- β-Oestradiyl-3,17-(acryloylalkyloxy)benzoat,
- β-Oestradiyl-3,17-acrylat,
- R- bzw. S-1,1'-Bi-2-naphtoyl[-4-alkoxybenzoyloxy]-(4,4-biphenyloyl-oxyalkoxyacrylat),
- R- bzw. S-1,1'-Bi-2-naphtoyl[hexyl- terephthaloyl]- (4,4-biphenyloyloxyalkoxyacrylat),
- R- bzw. S-Di-[4-(3-acryloyloxy-2-methylpropoxy)benzoesäure]-1,4-phenyldiester,
- 4-(4-Hexyloxybenzyoloxy)benzoesäure-2-octylester,
- Di-[4-(3-acryl- oyloxy-2-methylpropoxy]benzoesäure-1,4-phenyldiester,
- Di-[4-(3-acryloyloxy-2-methylpropoxy)benzoesäure-1,4-(2-methyl)-phenyldiester,
- Di-[4-(3-acryloyloxy)-2-methylpropoxy]benzoesäure-1,4-(2-methoxy)-phenyldiester,
- Di-[4-(1-acryloyloxy-1-methylethoxy]benzoesäure-1,4-phenyldiester,
- Di-[4-(1-acryloyloxy-1-methylethoxy]-benzoesäure-1,4-(2-methyl)phenyldiester,
- Di-[4-(1-acryloyloxy)-1-methylethoxy]benzoesäure-1,4-(2-methoxy)-phenyldiester,
- Di-[4-(6-acryloyloxy-3-methylhexoxy]benzoesäure-1,4-phenyldiester,
- Di- [4- (6-acryloyloxy-3-methylhexoxy]benzoesäure-1,4-(2-methyl)-phenyldiester,
- Di-[4-(6-acryloyloxy)-3-methylhexoxy]benzoesäure-1,4-(2-methoxy)-phenyldiester.

6. Verfahren nach Anspruch 5,
**dadurch gekennzeichnet,**
daß ein den Ausgangskomponenten zugesetzter Vernetzer aus 1,4-Diacryloyloxy-benzol besteht.

7. Verfahren nach Anspruch 5,
**dadurch gekennzeichnet,**
daß der Film in einer Stärke von etwa 3 bis 15 µm aufgerakelt wird.

8. Verfahren nach Anspruch 5,
**dadurch gekennzeichnet,**
daß nur plättchenförmigen Interferenzpigmente mit einen Durchmesser von 5 bis 100 µm, vorzugsweise von 10 bis 50 µm verwendet werden.

9. Lack zum Lackieren von Gebrauchsgegenständen, insbesondere von Fahrzeugkarosserien, in dem zumindest auch, vorzugsweise nur plättchenförmige, bei der Lack-Applikation sich selbsttätig etwa parallel zur Gegenstandsoberfläche ausrichtende Interferenzpigmente aus flüssigkristallinen Seitenketten-Polymeren (LCP) eingemischt sind, in denen die Seitengruppen-Mesogene zumindest näherungsweise nematisch und/oder smektisch und/oder cholesterisch geordnet sind,
**gekennzeichnet durch** die Gemeinsamkeit folgender Merkmale:
▷ die flüssigkristallinen Seitenketten-Polymere (LCP) der Interferenzpigmente sind aus einer nematischen und einer mit ihr vernetzten chiralen Komponente gebildet,
▷ wobei die nematische Komponente aus einer der nachfolgend aufgezählten, mono- oder difunktionellen, niedermolekularen Verbindungen oder einer Mischung daraus besteht, nämlich:
- Di-[4-(acryloyloxy)-alkyloxy]benzoesäure-1,4-phenyldiester,
- Di-[4-(acryloyloxy)-alkyloxy]benzoesäure-1,4-(2-methyl)phenyldiester,
- Di-[4- (acryloyloxy)alkyloxy)benzoesäure-1,4-(2-methoxy)phenyldiester,
▷ wobei die chirale Komponente aus einer der nachfolgend aufgezählten, optisch isomeren, ein Chiralitätszentrum aufweisenden niedermolekularen Verbindung oder einer Mischung daraus besteht, nämlich:
- Cholesteryl-3,5-(acryloyloxyalkoxy)benzoat,
- Cholesteryl-3,4-(acryloyloxyalkoxy)benzoat,
- Cholesteryl-2,5-(acryloyloxyalkoxy)bezoat,
- Cholesteryl-2,4-(acryloyloxyalkoxy)benzoat,
- β-Oestradiyl-3,17-(acryloylalkyloxy)benzoat,
- β-Oestradiyl-3,17-acrylat,
- R- bzw. S-1,1'-Bi-2-naphtoyl[-4-alkoxybenzoyloxy]-(4,4-biphenyloyl-oxyalkoxyacrylat),
- R- bzw. S-1,1'-Bi-2-naphtoyl[hexylterephthaloyl]-(4,4-biphenyloyloxyalkoxyacrylat),
- R bzw. S-Di-[4- (3-acryloyloxy-2-methylpropoxy)benzoesäure]-1,4-phenyldiester,
- 4-(4-Hexyloxybenzyoloxy)benzoesäure-2-octylester,
- Di-[4-(3-acryl- oyloxy-2-methylpropoxy]benzoesäure-1,4-phenyldiester,
- Di-[4-(3-acryloyloxy-2-methylpropoxy)benzoesäure-1,4-(2-methyl)-phenyldiester,
- Di-[4-(3-acryloyloxy)-2-methylpropoxy]benzoesäure-1,4-(2-methoxy)-phenyldiester,
- Di-[4-(1-acryloyloxy-1-methylethoxy]benzoesäure-1,4-phenyldiester,
- Di-[4-(1-acryloyloxy-1-methylethoxy]-benzoesäure-1,4-(2-methyl)-phenyldiester,
- Di-[4-(1-acryloyloxy)-1-methylethoxy]benzoesäure-1,4-(2-methoxy)-phenyldiester,
- Di-[4-(6-acryloyloxy-3-methylhexoxy]benzoesäure-1,4-phenyldiester,
- Di- [4- (6-acryloyloxy-3-methylhexoxy]benzoesäure-1,4-(2-methyl)-phenyldiester,
- Di-[4-(6-acryloyloxy)-3-methylhexoxy]benzoesäure-1,4-(2-methoxy)-phenyldiester.

10. Lack nach Anspruch 9,
**dadurch gekennzeichnet,**
daß ein den Ausgangskomponenten zugesetzter Vernetzer aus 1,4-Diacryloyloxy-benzol besteht.

11. Lack nach Anspruch 9,
**dadurch gekennzeichnet,**
daß Interferenzpigmente mit unterschiedlichen Netzebenenabständen gemischt im Lack enthalten sind.

12. Lack nach Anspruch 9,
**dadurch gekennzeichnet,**
daß die Interferenzpigmente eine Stärke von etwa 3 bis 15 µm aufweisen.

13. Lack nach Anspruch 9,
**dadurch gekennzeichnet,**
daß die plättchenförmigen Interferenzpigmente einen Durchmesser von 5 bis 100 µm, vorzugsweise von 10 bis 50 µm aufweisen.

14. Auf einen Gebrauchsgegenstand, insbesondere eine Fahrzeugkarosserie farbbestimmend applizierte Lackierung, mit in der farbbestimmenden Lacklage zumindest auch, vorzugsweise nur eingelagerten Interferenzpigmenten entsprechend der gewünschten Farbtönung des Gebrauchsgegenstandes, wobei die in der farbbestimmenden Lacklage eingelagerten Interferenzpigmente plättchenförmig ausgebildet und etwa parallel zur Gegenstandsoberfläche ausgerichtet sind und als ganzes jeweils aus vernetzten flüssigkristallinen Seitenketten-Polymeren (LCP) bestehen, wobei die Seitengruppen-Mesogene innerhalb der Interferenzpigmente zumindest näherungsweise nematisch und/oder smektisch und/oder cholesterisch geordnet sind,
**gekennzeichnet durch** die Gemeinsamkeit folgender Merkmale:
▷ die flüssigkristallinen Seitenketten-Polymere (LCP) der Interferenzpigmente sind aus einer nematischen und einer mit ihr vernetzten chiralen Komponente gebildet,
▷ wobei die nematische Komponente aus einer der nachfolgend aufgezählten, mono- oder difunktionellen, niedermolekularen Verbindungen oder einer Mischung daraus besteht, nämlich:
- Di-[4- (acryloyloxy)-alkyloxy]benzoesäure-1,4-phenyldiester,
- Di-[4- (acryloyloxy)-alkyloxy]benzoesäure-1,4-(2-methyl)phenyldiester,
- Di-[4-(acryloyloxy)alkyloxy]benzoesäure-1,4-(2-methoxy)phenyldiester,
▷ wobei die chirale Komponente aus einer der nachfolgend aufgezählten, optisch isomeren, ein Chiralitätszentrum aufweisenden niedermolekularen Verbindung oder einer Mischung daraus besteht, nämlich:
- Cholesteryl-3,5-(acryloyloxyalkoxy)benzoat,
- Cholesteryl-3,4-(acryloyloxyalkoxy)benzoat,
- Cholesteryl-2,5-(acryloyloxyalkoxy)bezoat,
- Cholesteryl-2,4-(acryloyloxyalkoxy)benzoat,
- β-Oestradiyl-3,17-(acryloylalkyloxy)benzoat,
- β-Oestradiyl-3,17-acrylat,
- R- bzw. S-1,1'-Bi-2-naphtoyl[-4-alkoxybenzoyloxy]-(4,4-biphenyloyl-oxyalkoxyacrylat),
- R- bzw. S-1,1'-Bi-2-naphtoyl[hexylterephthaloyl]-(4,4-biphenyloyloxyalkoxyacrylat),
- R bzw. S-Di-[4- (3-acryloyloxy-2-methylpropoxy)benzoesäure]-1,4-phenyldiester,
- 4-(4-Hexyloxybenzyoloxy)benzoesäure-2-octylester,
- Di-[4- (3-acryloyloxy-2-methylpropoxy]benzoesäure-1,4-phenyldiester,
- Di-[4-(3-acryloyloxy-2-methylpropoxy]benzoesäure-1,4-(2-methyl)-phenyldiester,
- Di-[4-(3-acryloyloxy)-2-methylpropoxy]benzoesäure-1,4-(2-methoxy)-phenyldiester,
- Di-[4-(1-acryloyloxy-1-methylethoxy]benzoesäure-1,4-phenyldiester,
- Di-[4-(1-acryloyloxy-1-methylethoxy]-benzoesäure-1,4-(2-methyl)-phenyldiester,
- Di-[4-(1-acryloyloxy)-1-methylethoxy]benzoesäure-1,4-(2-methoxy)-phenyldiester,
- Di-[4-(6-acryloyloxy-3-methylhexoxy]benzoesäure-1,4-phenyldiester,
- Di- [4- (6-acryloyloxy-3-methylhexoxy]benzoesäure-1,4-(2-methyl)-phenyldiester,
- Di-[4-(6-acryloyloxy)-3-methylhexoxy]benzoesäure-1,4-(2-methoxy)-phenyldiester.

15. Lackierung nach Anspruch 14,
**dadurch gekennzeichnet,**
daß ein den Ausgangskomponenten zugesetzter Vernetzer aus 1,4-Diacryloyloxy-benzol besteht.

16. Lackierung nach Anspruch 14,
**dadurch gekennzeichnet,**
daß der die farbbestimmende, mit Interferenzpigmenten versehene Lacklage tragende Untergrund dunkelfarbig ist.

17. Lackierung nach Anspruch 14,
**dadurch gekennzeichnet,**
daß der die farbbestimmende, mit Interferenzpigmenten versehene Lacklage tragende Untergrund in der selben Farbtönung gehalten ist wie ein Farbton der farbbestimmenden Lacklage.

18. Lackierung nach Anspruch 14,
**dadurch gekennzeichnet,**
daß Interferenzpigmente mit unterschiedlichen Netzebenenabständen gemischt in der farbbestimmenden Lacklage enthalten sind.

19. Lackierung nach Anspruch 14,
**dadurch gekennzeichnet,**
daß die Interferenzpigmente eine Stärke von etwa 3 bis 15 µm aufweisen.

20. Lackierung nach Anspruch 14,
**dadurch gekennzeichnet,**
daß die plättchenförmigen Interferenzpigmente einen Durchmesser von 5 bis 100 µm, vorzugsweise von 10 bis 50 µm aufweisen.

## Claims

1. Interference pigments, comprising liquid-crystal-line side-chain polymers (LCPs), for coloured coating materials, in which the side-group mesogens have an at least approximately nematic and/or smectic and/or cholesteric order,
**characterized by** the conjunction of the following features:
▷ the liquid-crystalline side-chain polymers (LCPs) of the interference pigments are formed from a nematic component and a chiral component which is crosslinked with it,
▷ the nematic component consisting of one of the mono- or difunctional, low molar mass compounds listed below, or a mixture thereof, namely:
- 1,4-diphenyl di[4-(acryloyloxy)alkyloxy]benzoates,
- 1,4-di(2-methyl)phenyl di[4-(acryloyloxy)alkyloxy]-benzoates,
- 1,4-di(2-methoxy)phenyl di[4-(acryloyloxy)alkyloxy]-benzoates,
▷ the chiral component consisting of one of the optically isomeric low molar mass compounds having a centre of chirality, which are listed below, or of a mixture thereof, namely:
- 3,5-cholesteryl (acryloyloxyalkoxy)benzoate,
- 3,4-cholesteryl (acryloyloxyalkoxy)benzoate,
- 2,5-cholesteryl (acryloyloxyalkoxy)benzoate,
- 2,4-cholesteryl (acryloyloxyalkoxy)benzoate,
- β-oestra-3,17-diyl (acryloylalkyloxy)benzoate,
- β-oestra-3,17-diyl acrylate,
- R- or S-1,1'-bi-2-naphthoyl [4-alkoxybenzoyloxy]-(4,4-biphenyloyloxyalkoxyacrylate),
- R- or S-1,1'-bi-2-naphthoyl [hexylterephthaloyl]-(4,4-biphenyloyloxyalkoxyacrylate),
- 1,4-diphenyl R- or S-di[4-(3-acryloyloxy-2-methylpropoxy)benzoate],
- 2-octyl 4-(4-hexyloxybenzoyloxy]benzoate,
- 1,4-diphenyl di[4-(3-acryloyloxy-2-methylpropoxy]-benzoate,
- 1,4-di(2-methyl)phenyl di[4-(3-acryloyloxy-2-methylpropoxy]benzoate,
- 1,4-di(2-methoxy)phenyl di[4-(3-acryloyloxy-2-methylpropoxy]benzoate,
- 1,4-diphenyl di[4-(1-acryloyloxy-l-methylethoxy]-benzoate,
- 1,4-di(2-methyl)phenyl di [4-(1-acryloyloxy-1-methylethoxy]benzoate,
- 1,4-di(2-methoxy)phenyl di[4-(1-acryloyloxy-1-methylethoxy]benzoate,
- 1,4-diphenyl di[4-(6-acryloyloxy-3-methylhexoxy]-benzoate,
- 1,4-di(2-methyl)phenyl di [4-(6-acryloyloxy-3-methylhexoxy]benzoate,
- 1,4-di(2-methoxy)phenyl di[4-(6-acryloyloxy-3-methylhexoxy]benzoate,

2. Interference pigments according to Claim 1, **characterized** in that a crosslinking agent added to the starting components consists of 1,4-diacryloyloxybenzene.

3. Interference pigments according to Claim 1, **characterized** in that the interference pigments have a thickness of from about 3 to 15 µm.

4. Interference pigments according to Claim 1, **characterized** in that the platelet-like interference pigments have a diameter of from 5 to 100 µm, preferably from 10 to 50 µm.

5. Process for the preparation of platelet-like interference pigments, especially for preparing interference pigments according to Claim 1, in which a film of molecules having at least approximately nematic and/or smectic and/or cholesteric order is produced by applying liquid-crystalline side-chain polymers (LCPs) in liquid state to a smooth substrate, where this film is cured, removed from the substrate and broken down into platelet-like particles, with particles having a diameter smaller than the film thickness and those having a diameter which is more than ten times greater than the film thickness being separated out by means of a particle size-selective separation process before the particles are subsequently processed as interference pigments,
**characterized** in that the thin film of liquid-crystalline side-chain polymers (LCPs) as characterized below are applied as solvent application or melted on from a powder:
▷ the side-chain polymers are formed from a nematic component and a chiral component which is crosslinked with it,
▷ the nematic component consisting of one of the mono- or difunctional, low molar mass compounds listed below, or a mixture thereof, namely:
- 1,4-diphenyl di[4-(acryloyloxy)alkyloxy]benzoates,
- 1,4-di(2-methyl)phenyl di [4- (acryloyloxy)alkyloxy]-benzoates,
- 1,4-di(2-methoxy)phenyl di[4-(acryloyloxy)alkyloxy]-benzoates,
▷ the chiral component consisting of one of the optically isomeric, low molar mass compounds having a centre of chirality, which are listed below, or of a mixture thereof, namely:
- 3,5-cholesteryl (acryloyloxyalkoxy)benzoate,
- 3,4-cholesteryl (acryloyloxyalkoxy)benzoate,
- 2,5-cholesteryl (acryloyloxyalkoxy)benzoate,
- 2,4-cholesteryl (acryloyloxyalkoxy)benzoate,
- β-oestra-3,17-diyl (acryloyloxyalkoxy)benzoate,
- β-oestra-3,17-diyl acrylate,
- R- or S-1,1'-bi-2-naphthoyl [4-alkoxybenzoyloxy]-(4,4-biphenyloyloxyalkoxyacrylate),
- R- or S-1,1'-bi-2-naphthoyl [hexylterephthaloyl]-(4,4-biphenyloyloxyalkoxyacrylate),
- 1,4-diphenyl R- or S-di[4-(3-acryloyloxy-2-methylpropoxy) benzoate],
- 2-octyl 4-(4-hexyloxybenzoyloxy]benzoate,
- 1,4-diphenyl di[4-(3-acryloyloxy-2-methylpropoxy]-benzoate,
- 1,4-di(2-methyl)phenyl di[4-(3-acryloyloxy-2-methylpropoxy]benzoate,
- 1,4-di(2-methoxy)phenyl di[4-(3-acryloyloxy-2-methylpropoxy]benzoate,
- 1,4-diphenyl di[4-(1-acryloyloxy-l-methylethoxy]-benzoate,
- 1,4-di(2-methyl)phenyl di[4-(1-acryloyloxy-1-methylethoxy]benzoate,
- 1,4-di(2-methoxy)phenyl di[4-(1-acryloyloxy-1-methylethoxy]benzoate,
- 1,4-diphenyl di[4-(6-acryloyloxy-3-methylhexoxy]-benzoate,
- 1,4-di(2-methyl)phenyl di[4-(6-acryloyloxy-3-methylhexoxy]benzoate,
- 1,4-di(2-methoxy)phenyl di [4-(6-acryloyloxy-3-methylhexoxy]benzoate,

6. Process according to Claim 5,
**characterized** in that a crosslinking agent added to the starting components consists of 1,4-diacryloyloxybenzene.

7. Process according to Claim 5,
**characterized** in that the film is knife-coated on in a thickness of from about 3 to 15 µm.

8. Process according to Claim 5,
**characterized** in that only plateletlike interference pigments having a diameter of from 5 to 100 µm, preferably 10 to 50 µm, are used.

9. Coating material for painting commodity articles, especially for vehicle bodies, in which, having been incorporated by mixing, there are interference pigments of which at least some, preferably all, are plateletlike, which automatically align themselves approximately parallel to the surface of the article in the course of the application of the coating material, and which are composed of liquid-crystalline side-chain polymers (LCPs) in which the side-group mesogens have an at least approximately nematic and/or smectic and/or cholesteric order, **characterized by** the conjunction of the following features:
▷ the liquid-crystalline side-chain polymers (LCPs) of the interference pigments are formed from a nematic component and a chiral component which is crosslinked with it,
▷ the nematic component consisting of one of the mono- or difunctional, low molar mass compounds listed below, or a mixture thereof, namely:
- 1,4-diphenyl di[4-(acryloyloxy)alkyloxy]benzoates,
- 1,4-di(2-methyl)phenyl di[4-(acryloyloxy)alkyloxy]-benzoates,
- 1,4-di(2-methoxy)phenyl di [4- (acryloyloxy) alkyloxy]-benzoates,
▷ the chiral component consisting of one of the optically isomeric, low molar mass compounds having a centre of chirality, which is listed below, or of a mixture thereof, namely:
- 3,5-cholesteryl (acryloyloxyalkoxy)benzoate,
- 3,4-cholesteryl (acryloyloxyalkoxy)benzoate,
- 2,5-cholesteryl (acryloyloxyalkoxy)benzoate,
- 2,4-cholesteryl (acryloyloxyalkoxy)benzoate,
- β-oestra-3,17-diyl (acryloyloxyalkoxy)benzoate,
- β-oestra-3,17-diyl acrylate,
- R- or S-1,1'-bi-2-naphthoyl [4-alkoxybenzoyloxy]-(4,4-biphenyloyloxyalkoxyacrylate),
- R- or S-1,1'-bi-2-naphthoyl [hexylterephthaloyl]-(4,4-biphenyloyloxyalkoxyacrylate),
- 1,4-diphenyl R- or S-di[4-(3-acryloyloxy-2-methylpropoxy)benzoate],
- 2-octyl 4-(4-hexyloxybenzoyloxy]benzoate,
- 1,4-diphenyl di[4-(3-acryloyloxy-2-methylpropoxy]benzoate,
- 1,4-di(2-methyl)phenyl di [4-(3-acryloyloxy-2-methylpropoxy]benzoate,
- 1,4-di(2-methoxy)phenyl di[4-(3-acryloyloxy-2-methylpropoxy]benzoate,
- 1,4-diphenyl di[4-(1-acryloyloxy-1-methylethoxy]-benzoate,
- 1,4-di(2-methyl)phenyl di[4-(1-acryloyloxy-1-methylethoxy]benzoate,
- 1,4-di(2-methoxy)phenyl di[4-(1-acryloyloxy-1-methylethoxy]benzoate,
- 1,4-diphenyl di[4-(6-acryloyloxy-3-methylhexoxy]-benzoate,
- 1,4-di(2-methyl)phenyl di[4-(6-acryloyloxy-3-methylhexoxy]benzoate,
- 1,4-di(2-methoxy)phenyl di[4-(6-acryloyloxy-3-methylhexoxy]benzoate,

10. Coating material according to Claim 9,
**characterized** in that a crosslinking agent added to the starting components consists of 1,4-diacryloyloxybenzene.

11. Coating material according to Claim 9,
**characterized** in that interference pigments having different interplanar spacings are present, mixed, in the coating material.

12. Coating material according to Claim 9,
**characterized** in that interference pigments have a thickness from about 3 to 15 µm.

13. Coating material according to Claim 9,
**characterized** in that the plateletlike interference pigments have a diameter of from 5 to 100 µm, preferably from 10 to 50 µm.

14. Coating system which is applied to a commodity article, especially a vehicle body, so as to define its colour, the colour-defining coating layer containing pigments of which at least some, preferably all, are incorporated interference pigments, in accordance with the desired coloration of the commodity article, the interference pigments incorporated in the colour-defining coating layer being plateletlike in form, aligned approximately parallel to the surface of the article and consisting as a whole in each case of crosslinked liquid-crystalline side-chain polymers (LCPs), the side-group mesogens within the interference pigments having an at least approximately nematic and/or smectic and/or cholesteric order,
**characterized by** the conjunction of the following features:
▷ the liquid-crystalline side-chain polymers (LCPs) of the interference pigments are formed from a nematic component and a chiral component which is crosslinked with it,
▷ the nematic component consisting of one of the mono- or difunctional, low molar mass compounds listed below, or a mixture thereof, namely:
- 1,4-diphenyl di[4-(acryloyloxy)alkyloxy]benzoates,
- 1,4-di(2-methyl)phenyl di[4-(acryloyloxy)alkyloxy]-benzoates,
- 1,4-di(2-methoxy)phenyl di[4-(acryloyloxy)alkyloxy]-benzoates,
▷ the chiral component consisting of one of the optically isomeric, low molar mass compounds having a centre of chirality, which are listed below, or of a mixture thereof, namely:
- 3,5-cholesteryl (acryloyloxyalkoxy)benzoate,
- 3,4-cholesteryl (acryloyloxyalkoxy)benzoate,
- 2,5-cholesteryl (acryloyloxyalkoxy)benzoate,
- 2,4-cholesteryl (acryloyloxyalkoxy)benzoate,
- β-oestra-3,17-diyl (acryloyloxyalkoxy)benzoate,
- β-oestra-3,17-diyl acrylate,
- R- or S-1,1'-bi-2-naphthoyl [4-alkoxybenzoyloxy]-(4,4-biphenyloyloxyalkoxyacrylate),
- R- or S-1,1'-bi-2-naphthoyl [hexylterephthaloyl]-(4,4-biphenyloyloxyalkoxyacrylate),
- 1,4-diphenyl R- or S-di[4-(3-acryloyloxy-2-methylpropoxy)benzoate],
- 2-octyl 4-(4-hexoyloxybenzoyloxy]benzoate,
- 1,4-diphenyl di[4-(3-acryloyloxy-2-methylpropoxy]-benzoate,
- 1,4-di(2-methyl)phenyl di [4-(3-acryloyloxy-2-methylpropoxy]benzoate,
- 1,4-di(2-methoxy)phenyl di[4-(3-acryloyloxy-2-methylpropoxy]benzoate,
- 1,4-diphenyl di[4-(1-acryloyloxy-1-methylethoxy]-benzoate,
- 1,4-di(2-methyl)phenyl di[4-(1-acryloyloxy-1-methylethoxy]benzoate,
- 1,4-di(2-methoxy)phenyl di[4-(1-acryloyloxy-1-methylethoxy]benzoate,
- 1,4-diphenyl di[4-(6-acryloyloxy-3-methylhexoxy]benzoate,
- 1,4-di(2-methyl)phenyl di[4-(6-acryloyloxy-3-methylhexoxy]benzoate,
- 1,4-di(2-methoxy)phenyl di[4-(6-acryloyloxy-3-methylhexoxy]benzoate,

15. Coating system according to Claim 14,
**characterized** in that a crosslinking agent added to the starting components consists of 1,4-diacryloyloxybenzene.

16. Coating system according to Claim 14,
**characterized** in that the substrate bearing the colour-defining coating layer provided with interference pigments is dark in colour.

17. Coating system according to Claim 14,
**characterized** in that the substrate bearing the colour-defining coating layer provided with interference pigments is held in the same coloration as one shade of the colour-defining coating layer.

18. Coating system according to Claim 14,
**characterized** in that interference pigments having different interplanar spacings are present, mixed, in the colour-defining coating layer.

19. Coating system according to Claim 14,
**characterized** in that interference pigments have a thickness from about 3 to 15 µm.

20. Coating system according to Claim 14,
**characterized** in that plateletlike interference pigments have a diameter from about 5 to 100 µm, preferably from 10 to 50 µm.

## Revendications

1. Pigments à interférences consistant en polymères à cristaux liquides en chaînes latérales (LCP) pour peintures colorées, dans lesquels les mésogènes des groupes latéraux sont en disposition nématique et/ou smectique et/ou cholestérique au moins approchée?
Caractérisés par l'ensemble des caractéristiques suivantes :
- les polymères à cristaux liquides en chaînes latérales (LCP) des pigments à interférences sont constitués d'un composant nématique et d'un composant chiral réticulé avec le composant nématique,
- le composant nématique consiste en l'un des composés à bas poids moléculaire mono ou difonctionnels ci-après, ou en un mélange de ces composés, à savoir :
un diester 1,4-phénylique d'acide di-[4-(acryloyloxy)-alkyloxy]benzoïque,
un diester 1,4-(2-méthyl)phénylique d'acide di-[4-(acryloyloxy)-alkyloxy]benzoïque,
un diester 1,4-(2-méthoxy)phénylique d'acide di-[4-(acryloyloxy)-alkyloxy]benzoïque,
- le composant chiral consiste en l'un des composés à bas poids moléculaire à centre de chiralité, à l'état d'isomère optique, énumérés ci-après, ou en un mélange de ces composés, à savoir :
- un 3,5-(acryloyloxyalcoxy)benzoate de cholestéryle,
- un 3,4-(acryloyloxyalcoxy)benzoate de cholestéryle,
- un 2,5-(acryloyloxyalcoxy)benzoate de cholestéryle,
- un 2,4-(acryloyloxyalcoxy)benzoate de cholestéryle,
- un 3,17-(acryloyloxyalkyloxy)benzoate de β-oestradiyle,
- le 3,7-acrylate de β-oestradiyle,
- un R- ou S-1,1'-bi-2-naphtoyl-[4-alcoxybenzoyloxy]-(4,4-biphényloyl-oxyalcoxy-acrylate).
- un R- ou S-1,1'-bi-2-naphtoyl-[hexyltéréphtaloyl]-(4,4-biphényloyl-oxyalcoxy-acrylate),
- le diester 1,4-phénylique de l'acide R- ou S-di-[4-(3-acryloyloxy-2-méthylpropoxy)benzoïque],
- le 4-(4-hexyloxybenzoyloxy)benzoate de 2-octyle,
- le diester 1,4-phénylique de l'acide di-[4-(3-acryloyloxy-2-méthylpropoxy]-benzoïque,
- le diester 1,4-(2-méthyl)-phénylique de l'acide di-[4-(3-acryloyloxy-2-méthylpropoxy]-benzoïque,
- le diester 1,4-(2-méthoxy)phénylique de l'acide di-[4-(3-acryloyloxy)-2-méthylpropoxy]-benzoïque,
- le diester 1,4-phénylique de l'acide di-[4-(1-acryloyloxy-1-méthyléthoxy]-benzoïque,
- le diester 1,4-(2-méthyl)phénylique de l'acide di-[4-(1-acryloyloxy-1-méthyléthoxy]-benzoïque,
- le diester 1,4-(2-méthoxy)phénylique de l'acide di-[4-(1-acryloyloxy)-1-méthyléthoxy]-benzoïque,
- le diester 1,4-phénylique de l'acide di-[4-(6-acryloyloxy-3-méthyléthoxy]-benzoïque,
- le diester 1,4-(2-méthyl)phénylique de l'acide di-[4-(6-acryloyloxy-3-méthyléthoxy]-benzoïque,
- le diester 1,4-(2-méthoxy)phénylique de l'acide di-[4-(6-acryloyloxy)-3-méthylethoxy]-benzoïque.

2. Pigments à interférences selon revendication 1, caractérisés en ce qu'un agent réticulant ajouté aux composants de départ consiste en le 1,4-diacryloyloxybenzène.

3. Pigments à interférences selon revendication 1, caractérisé en ce que les pigments à interférences ont une épaisseur d'environ 3 à 15 µm.

4. Pigments à interférences selon revendication 1, caractérisés en ce que, ayant la forme de tablettes, ils ont un diamètre de 5 à 100 µm, de préférence de 10 à 100 µm.

5. Procédé pour préparer des pigments à interférences en tablettes, en particulier des pigments à interférences selon la revendication 1, dans lequel, par application de polymères à cristaux liquides en chaînes latérales (LCP) à l'état de liquide sur un support lisse, on forme une pellicule mince à molécules en disposition nématique et/ou smectique et/ou cholestérique au moins approchée, on durcit cette pellicule, on la détache du support et on la broie à l'état de particules en forme de tablettes, et avant d'utiliser ces dernières en tant que pigments à interférences, on sépare par classification granulométrique les particules dont le diamètre est inférieur à l'épaisseur de la pellicule et les particules dont le diamètre est plus de difois plus grand que l'épaisseur de la pellicule,
caractérisé en ce que
la pellicule mince est appliquée à partir des polymères à chaînes latérales à cristaux liquides (LCP) présentant les caractéristiques suivantes, en solution dans un solvant ou par fusion d'une poudre :
- les polymères à chaînes latérales sont constitués d'un composant nématique et d'un composant chiral réticulé avec le composant nématique,
- le composant nématique consiste en l'un des composés à bas poids moléculaire, mono- ou di-fonctionnel énumérés ci-après, ou en un mélange de ces composés, à savoir :
un diester 1,4-phénylique d'acide di-[4-(acryloyloxy)-alkyloxy]benzoïque,
un diester 1,4-(2-méthyl)phénylique d'acide di-[4-(acryloyloxy)-alkyloxy]benzoïque,
un diester 1,4-(2-méthoxy)phénylique d'acide di-[4-(acryloyloxy)-alkyloxy]benzoïque,
- le composant chiral consiste en l'un des composés à bas poids moléculaire, à un centre de chiralité à l'état d'isomère optique, énumérés ci-après, ou en un mélange de ces composés, à savoir :
- un 3,5-(acryloyloxyalcoxy)benzoate de cholestéryle,
- un 3,4-(acryloyloxyalcoxy)benzoate de cholestéryle,
- un 2,5-(acryloyloxyalcoxy)benzoate de cholestéryle,
- un 2,4-(acryloyloxyalcoxy)benzoate de cholestéryle,
- un 3,17-(acryloyloxyalkyloxy)benzoate de β-oestradiyle,
- le 3,7-acrylate de β-oestradiyle,
- un R- ou S-1,1'-bi-2-naphtoyl-[4-alcoxybenzoyloxy]-(4,4-biphényloyl-oxyalcoxy-acrylate),
- un R- ou S-1,1'-bi-2-naphtoyl-[hexyltéréphtaloyl]-(4,4-biphényloyl-oxyalcoxy-acrylate),
- le diester 1,4-phénylique de l'acide R- ou S-di-[4-(3-acryloyloxy-2-méthylpropoxy)benzoïque],
- le 4-(4-hexyloxybenzoyloxy)benzoate de 2-octyle,
- le diester 1,4-phénylique de l'acide di-[4-(3-acryloyloxy-2-méthylpropoxy]-benzoïque,
- le diester 1,4-(2-méthyl)-phénylique de l'acide di-[4-(3-acryloyloxy-2-méthylpropoxy]-benzoïque,
- le diester 1,4-(2-méthoxy)phénylique de l'acide di-[4-(3-acryloyloxy)-2-méthylpropoxy]-benzoïque,
- le diester 1,4-phénylique de l'acide di-[4-(1-acryloyloxy-1-méthyléthoxy]-benzoïque,
- le diester 1,4-(2-méthyl)phénylique de l'acide di-[4-(1-acryloyloxy-1-méthyléthoxy]-benzoïque,
- le diester 1,4-(2-méthoxy)phénylique de l'acide di-[4-(1-acryloyloxy)-1-méthyléthoxy]-benzoïque,
- le diester 1,4-phénylique de l'acide di-[4-(6-acryloyloxy-3-méthyléthoxy]-benzoïque,
- le diester 1,4-(2-méthyl)phénylique de l'acide di-[4-(6-acryloyloxy-3-méthyléthoxy]-benzoïque,
- le diester 1,4-(2-méthoxy)phénylique de l'acide di-[4-(6-acryloyloxy)-3-méthyléthoxy]-benzoïque.

6. Procédé selon revendication 5, caractérisé en ce qu'un agent réticulant ajouté aux composants de départ consiste en le 1,4-diacryloyloxybenzène.

7. Procédé selon revendication 5, caractérisé en ce que la pellicule est appliquée à la racle à une épaisseur d'environ 3 à 15 µm.

8. Procédé selon revendication 5, caractérisé en ce que les pigments à interférences, à l'état de tablettes, ont un diamètre de 5 à 100 µm, de préférence de 10 à 50 µm.

9. Peinture pour le revêtement d'objets usuels, en particulier de carrosseries de véhicules, dans laquelle on a mélangé, en partie au moins mais de préférence exclusivement, des pigments à interférences consistant en polymères à cristaux liquides en chaînes latérales (LCP) qui, à l'application de la peinture, s'orientent spontanément à peu près parallèlement à la surface de l'objet, et dans lesquels les mésogènes des groupes latéraux sont en disposition nématique et/ou smectique et/ou cholestérique au moins approchée,
caractérisé par l'ensemble des caractéristiques suivantes :
- les polymères à cristaux liquides en chaînes latérales (LCP) des pigments à interférences sont constitués d'un composant nématique et d'un composant chiral réticulé avec le composant nématique,
- le composant nématique consiste en l'un des composés à bas poids moléculaire mono ou difonctionnels ci-après, ou en un mélange de ces composés, à savoir :
un diester 1,4-phénylique d'acide di-[4-(acryloyloxy)-alkyloxy]benzoïque,
un diester 1,4-(2-méthyl)phénylique d'acide di-[4-(acryloyloxy)-alkyloxy]benzoïque,
un diester 1,4-(2-méthoxy)phénylique d'acide di-[4-(acryloyloxy)-alkyloxy]benzoïque,
- le composant chiral consiste en l'un des composés à bas poids moléculaire à centre de chiralité, à l'état d'isomère optique, énumérés ci-après, ou en un mélange de ces composés, à savoir :
- un 3,5-(acryloyloxyalcoxy)benzoate de cholestéryle,
- un 3,4-(acryloyloxyalcoxy)benzoate de cholestéryle,
- un 2,5-(acryloyloxyalcoxy)benzoate de cholestéryle,
- un 2,4-(acryloyloxyalcoxy)benzoate de cholestéryle,
- un 3,17-(acryloyloxyalcoxy)benzoate de β-oestradiyle,
- le 3,7-acrylate de β-oestradiyle,
- un R- ou S-1,1'-bi-2-naphtoyl-[4-alcoxybenzoyloxy]-(4,4-biphényloyl-oxyalcoxy-acrylate),
- un R- ou S-1,1'-bi-2-naphtoyl-[hexyltéréphtaloyl]-(4,4-biphényloyl-oxyalcoxy-acrylate),
- le diester 1,4-phénylique de l'acide R- ou S-di-[4-(3-acryloyloxy-2-méthylpropoxy)benzoïque],
- le 4-(4-hexyloxybenzoyloxy)benzoate de 2-octyle,
- le diester 1,4-phénylique de l'acide di-[4-(3-acryloyloxy-2-méthylpropoxy]-benzoïque,
- le diester 1,4-(2-méthyl)-phénylique de l'acide di-[4-(3-acryloyloxy-2-méthylpropoxy)-benzoïque,
- le diester 1,4-(2-méthoxy)phénylique de l'acide di-[4-(3-acryloyloxy)-2-méthylpropoxy]-benzoïque,
- le diester 1,4-phénylique de l'acide di-[4-(1-acryloyloxy-1-méthyléthoxy]-benzoïque,
- le diester 1,4-(2-méthyl)phénylique de l'acide di-[4-(1-acryloyloxy-1-méthyléthoxy]-benzoïque,
- le diester 1,4-(2-méthoxy)phénylique de l'acide di-[4-(1-acryloyloxy)-1-méthyléthoxy]-benzoïque,
- le diester 1,4-phénylique de l'acide di-[4-(6-acryloyloxy-3-méthyléthoxy]-benzoïque,
- le diester 1,4-(2-méthyl)phénylique de l'acide di-[4-(6-acryloyloxy-3-méthyléthoxy]-benzoïque,
- le diester 1,4-(2-méthoxy)phénylique de l'acide di-[4-(6-acryloyloxy)-3-méthyléthoxy)-benzoïque.

10. Peinture selon revendication 9, caractérisée en ce qu'un agent réticulant ajouté au composant de départ consiste en le 1,4-diacryloyloxybenzène.

11. Peinture selon revendication 9, caractérisée en ce qu'elle contient, en mélange, des pigments à interférences ayant des distances entre plans réticulaires différentes.

12. Peinture selon revendication 9, caractérisée en ce que les pigments à interférences ont une épaisseur d'environ 3 à 15 µm.

13. Peinture selon revendication 9, caractérisée en ce que les pigments à interférences, à l'état de tablettes, ont un diamètre de 5 à 100 µm, de préférence de 10 à 50 µm.

14. Revêtement appliqué sur un objet usuel, en particulier sur une carrosserie de véhicule, conférant la coloration, avec, dans la couche de peinture conférant la coloration, en partie au moins, de préférence exclusivement, des pigments à interférences dont la nature est fonction de la couleur recherchée pour l'objet usuel, les pigments à interférences occlus dans la couche de peinture étant à l'état de tablettes et orientés à peu près parallèlement à la surface de l'objet et constitués chacun, en totalité, de polymères à cristaux liquides en chaînes latérales (LCP), les mésogènes des groupes latéraux contenus dans les pigments à interférences étant en disposition nématique et/ou smectique et/ou cholestérique au moins approchée,
caractérisé par l'ensemble des caractéristiques suivantes :
- les polymères à cristaux liquides en chaînes latérales (LCP) des pigments à interférences sont constitués d'un composant nématique et d'un composant chiral réticulé avec le composant nématique,
- le composant nématique consiste en l'un des composés à bas poids moléculaire mono ou di-fonctionnels ci-après, ou en un mélange de ces composés, à savoir :
un diester 1,4-phénylique d'acide di-[4-(acryloyloxy)alkyloxy]benzoïque,
un diester 1,4-(2-méthyl)phénylique d'acide di-[4-(acryloyloxy)-alkyloxy]benzoïque,
un diester 1,4-(2-méthoxy)phénylique d'acide di-[4-(acryloyloxy)-alkyloxy]benzoïque,
- le composant chiral consiste en l'un des composés à bas poids moléculaire à centre de chiralité, à l'état d'isomère optique, énumérés ci-après, ou en un mélange de ces composés, à savoir :
- un 3,5-(acryloyloxyalcoxy)benzoate de cholestéryle,
- un 3,4-(acryloyloxyalcoxy)benzoate de cholestéryle,
- un 2,5-(acryloyloxyalcoxy)benzoate de cholestéryle,
- un 2,4-(acryloyloxyalcoxy)benzoate de cholestéryle,
- un 3,17-(acryloyloxyalkyloxy)benzoate de β-oestradiyle,
- le 3,7-acrylate de β-oestradiyle,
- un R- ou S-1,1'-bi-2-naphtoyl-[4-alcoxybenzoyloxy]-(4,4-biphényloyl-oxyalcoxy-acrylate),
- un R- ou S-1,1'-bi-2-naphtoyl-[hexyltéréphtaloyl]-(4,4-biphényloyl-oxyalcoxy-acrylate),
- le diester 1,4-phénylique de l'acide R- ou S-di-[4-(3-acryloyloxy-2-méthylpropoxy)benzoïque],
- le 4-(4-hexyloxybenzoyloxy)benzoate de 2-octyle,
- le diester 1,4-phénylique de l'acide di-[4-(3-acryloyloxy-2-méthylpropoxy]-benzoïque,
- le diester 1,4-(2-méthyl)-phénylique de l'acide di-[4-(3-acryloyloxy-2-méthylpropoxy]-benzoïque,
- le diester 1,4-(2-méthoxy)phénylique de l'acide di-[4-(3-acryloyloxy)-2-méthylpropoxy]-benzoïque,
- le diester 1,4-phénylique de l'acide di-[4-(1-acryloyloxy-1-méthyléthoxy]-benzoïque,
- le diester 1,4-(2-méthyl)phénylique de l'acide di-[4-(1-acryloyloxy-1-méthyléthoxy]-benzoïque,
- le diester 1,4-(2-méthoxy)phénylique de l'acide di-[4- (1-acryloyloxy)-1-méthyléthoxy]-benzoïque,
- le diester 1,4-phénylique de l'acide di-[4-(6-acryloyloxy-3-méthyléthoxy]-benzoïque,
- le diester 1,4-(2-méthyl)phénylique de l'acide di-[4-(6-acryloyloxy-3-méthyléthoxy]-benzoïque,
- le diester 1,4-(2-méthoxy)phénylique de l'acide di-[4-(6-acryloyloxy)-3-méthyléthoxy]-benzoïque.

15. Revêtement selon revendication 1, caractérisé en ce qu'un agent réticulant ajouté aux composants de départ consiste en le 1,4-diacryloyloxybenzène.

16. Revêtement selon revendication 14, caractérisé en ce que le fond portant la couche de peinture conférant la coloration et qui contient les pigments à interférences est lui-même de couleur sombre.

17. Revêtement selon revendication 14, caractérisé en ce que le fond portant la couche de peinture conférant la couleur et contenant les pigments à interférences présente une coloration identique à l'une des nuances de la couche de peinture conférant la couleur.

18. Revêtement selon revendication 14, caractérisé en ce que le fond portant la couche de peinture conférant la couleur contient, en mélange, des pigments à interférences ayant des distances entre plans réticulaires différentes.

19. Revêtement selon revendication 14, caractérisé en ce que les pigments à interférences ont une épaisseur d'environ 3 à 15 µm.

20. Revêtement selon revendication 14, caractérisé en ce que les pigments à interférences, à l'état de tablettes, ont un diamètre de 5 à 100 µm, de préférence de 10 à 50 µm.
